# EUROPEAN PATENT APPLICATION

(11) **EP 4 645 125 A1**
(43) Date of publication of application: **05.11.2025**
(21) Application number: 24173912.7
(22) Date of filing: 02.05.2024
(51) Int. Cl.: G06F 21/30, H04L 9/32, H04L 9/40, H04W 12/06

(54) **SECURE FLEET MANAGEMENT OF DEVICES**

(30) Priority: 30.04.2024 EP 24173621
(71) Applicant: GN Hearing A/S, 2750 Ballerup (DK)
(72) Inventor: DREILING, Philippe, DK-2750 Ballerup (DK); PEDERSEN, Brian Dam, DK-2750 Ballerup (DK); VENDELBO, Allan Munk, DK-2750 Ballerup (DK); JEPSEN, Jesper Birk, DK-2750 Ballerup (DK); SCHWARTZ, Michael Sødal, DK-2750 Ballerup (DK)
(74) Representative: Aera A/S

(57) **Abstract**

A first audio device is disclosed. The present disclosure provides a first audio device for communication with a second audio device. The first audio device comprises a processor for processing transducer input data and providing an electrical output signal based on the transducer input data. The first audio device comprises a receiver for converting the electrical output signal to an audio output signal. The first audio device comprises a memory. Optionally, the memory of the first audio device has stored thereon a first audio device key associated with the first audio device. Optionally, the first audio device is configured to communicate with a second audio device. Optionally, the first audio device is configured to obtain first authentication data. Optionally, the first audio device is configured to encrypt the first authentication data with the first audio device key.

## Description

The present disclosure relates to an audio device and related methods including a method of securely managing a set of devices. In particular, audio devices and methods for secure communication between devices.

### BACKGROUND

The developments of communication systems for audio and/or video conferencing and artificially generated voice and/or video also known as deepfaking presents new challenges for users participating in such audio and/or video conferences as it can be difficult to trust whether a real person or merely a deepfaked version of the person is participating.

### SUMMARY

Accordingly, there is a need for systems, devices, and methods with improved security and authentication.

A first audio device is disclosed. The present disclosure provides a first audio device for communication with a second audio device. The first audio device comprises a processor for processing transducer input data and providing an electrical output signal based on the transducer input data. The first audio device comprises a receiver for converting the electrical output signal to an audio output signal. The first audio device comprises a memory. Optionally, the memory of the first audio device has stored thereon a first audio device key associated with the first audio device. Optionally, the first audio device is configured to communicate with a second audio device. Optionally, the first audio device is configured to obtain first authentication data. Optionally, the first audio device is configured to encrypt the first authentication data with the first audio device key. Optionally, the first audio device is configured to send, to an external device, a first authentication message comprising a first audio device identifier associated with the first audio device. Optionally, the first audio device is configured to send, to an external device, a second audio device identifier associated with the second audio device. Optionally, the first audio device is configured to send, to an external device, the first authentication data encrypted with the first audio device key. Optionally, the first audio device is configured to receive, from the external device, a first authentication response. Optionally, the first authentication response indicates whether the first audio device is authenticated by the external device and the second audio device is authenticated by the external device.

The present disclosure provides for a server device. The server device comprises a memory having stored thereon a first audio device key, a first audio device identifier associated with a first audio device, and a second device identifier associated with a second audio device. Optionally, the server device comprises an interface. The server device comprises a processor operatively coupled to the memory and the interface. The server device is configured to receive, from the first audio device, a first authentication message comprising a first audio device identifier associated with the first audio device. Optionally, the server device is configured to receive, from the first audio device, a second audio device identifier associated with the second audio device, and a first authentication data encrypted with a first audio device key. The server device is configured to authenticate the first audio device based on the first authentication message. The server device is configured to verify, based on the second audio device identifier, the second audio device. The server device is configured to send, to the first audio device, a first authentication response indicating whether the first audio device is authenticated by the server device and the second audio device is verified by the server device.

The present disclosure provides for a method performed by a first audio device. In one or more example methods, the first audio device comprises a memory having stored thereon a first audio device key associated with the first audio device. In one or more examples, the method comprises obtaining first authentication data. The method comprises encrypting the first authentication data with the first audio device key. Optionally, the method comprises sending, to an external device, a first authentication message comprising a first audio device identifier associated with the first audio device. The first authentication message comprises a second audio device identifier associated with the second audio device. The first authentication message comprises the first authentication data encrypted with the first audio device key. The method comprises receiving, from the external device, a first authentication response indicating whether the first audio device is authenticated by the external device and the second audio device is verified by the external device.

The present disclosure provides for a method, performed by a server device, wherein the server device comprises a memory having stored thereon a first audio device key, a first audio device identifier associated with a first audio device, and a second device identifier associated with a second audio device. The method comprises receiving, from the first audio device, a first authentication message. In one or more example methods, the first authentication message comprises a first audio device identifier associated with the first audio device, a second audio device identifier associated with the second audio device , and a first authentication data encrypted with a first audio device key. The method comprises authenticating the first audio device based on the first authentication message. The method comprises verifying, based on the second audio device identifier, the second audio device. The method comprises sending, to the first audio device, a first authentication response indicating whether the first audio device is authenticated by the server device and the second audio device is verified by the server device.

It is an advantage of the present disclosure that the disclosed first audio device and the server device enable an authentication of the first audio device and optionally of the user of the first audio device, thereby preventing against impersonation attacks, such as deep fakes. Advantageously, the disclosed technique allows to obtain a federation of trusted devices based on the audio device key(s), that leads to a further trust into the user operating the audio device.

### BRIEF DESCRIPTION OF THE DRAWINGS

The above and other features and advantages of the present invention will become readily apparent to those skilled in the art by the following detailed description of exemplary embodiments thereof with reference to the attached drawings, in which:
Fig. 1 schematically illustrates an exemplary communication system according to this disclosure,
Fig. 2 is a flow diagram of an exemplary method performed by a first audio device according to this disclosure; and
Fig. 3 is a flow diagram of an exemplary method performed by a server device according to this disclosure;
Fig. 4 is a signaling diagram illustrating an example communication according to this disclosure; and
Fig. 5 is a signaling diagram illustrating an example communication according to this disclosure.

### DETAILED DESCRIPTION

Various example embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

A communication system and devices thereof are disclosed. For example electronic devices such as communication devices and or audio devices for a communication system is disclosed correction are disclosed. Further, methods of operating and then chronic device such as methods for operating a communication device and methods for operating an audio device are disclosed.

In one or more examples, the audio device (such as first audio device, and/or second audio device) may be an earbud, speakerphone, a loudspeaker device, a microphone device, a headphone, a headset, a hearing aid, etc.

As used herein, the term "hearing device" refers to a device configured to assist a user in hearing a sound, such as a hearing instrument, or a hearing aid device.

The hearing device may be a hearing aid of the behind-the-ear (BTE) type, in-the-ear (ITE) type, in-the-canal (ITC) type, receiver-in-canal (RIC) type, receiver-in-the-ear (RITE) type or microphone-and-receiver-in-the- ear (MaRIE) type. The hearing device may be a binaural hearing aid in a binaural hearing system. The binaural hearing system may comprise a first hearing aid and a second hearing aid, wherein the first hearing aid and/or the second hearing aid may be the hearing device(s) as disclosed herein.

The audio device may be configured for wireless communication with one or more devices, such as with another audio device, e.g. as part of a binaural hearing system, and/or with one or more accessory devices, such as a smartphone and/or a smart watch. Accordingly, the audio device may comprise a transceiver module. The hearing device/transceiver module optionally comprises an antenna for converting one or more wireless input signals, e.g. a first wireless input signal and/or a second wireless input signal, to antenna output signal(s). The wireless input signal(s) may origin from external source(s), such as spouse microphone device(s), wireless TV audio transmitter, and/or a distributed microphone array associated with a wireless transmitter. The wireless input signal(s) may origin from another audio device, e.g. as part of a binaural hearing system, and/or from one or more accessory devices

The present disclosure provides a first audio device for communication with a second audio device. The first audio device comprises a processor for processing transducer input data and providing an electrical output signal based on the transducer input data.

Optionally, the first audio device comprises a set of input transducers for provision of transducer input data, the set of input transducers comprising a first input transducer for provision of a first transducer input signal as part of the transducer input data. For example, a transducer is a microphone.

The first audio device comprises a receiver for converting the electrical output signal to an audio output signal. The first audio device comprises a memory. Optionally, the memory of the first audio device has stored thereon a first audio device key associated with the first audio device.

In one or more examples, the first audio device is configured to communicate with a second audio device, and an external device and optionally one or more communication devices, and optionally a server device.

The first audio device is configured to obtain (e.g. receive, retrieve, generate) first authentication data.

Optionally, the first audio device is configured to encrypt the first authentication data with the first audio device key. Optionally, the first audio device is configured to send, to an external device, a first authentication message comprising a first audio device identifier associated with the first audio device. Optionally, the first audio device is configured to send, to an external device, a second audio device identifier associated with the second audio device. The second audio device is different from the first audio device. Optionally, the first audio device is configured to send, to an external device, the first authentication data encrypted with the first audio device key. Optionally, the first audio device is configured to receive, from the external device, a first authentication response. Optionally, the first authentication response indicates whether the first audio device is authenticated by the external device and the second audio device is authenticated by the external device. Optionally, the first authentication response indicates that the first audio device is authenticated by the external device and/or the second audio device is authenticated by the external device. Optionally, the first authentication response indicates that the first audio device fails to be authenticated by the external device and/or the second audio device is rejected by the external device. For example, in the event that the first authentication response indicates that the first audio device and/or the second audio device are not authenticated, the communication is disregarded by the external device and the server device may update an authentication status for each audio device accordingly.

As used herein, the term "key" refers to a cryptographic key, i.e. a piece of data, (e.g. a string, a parameter) that determines a functional output of a cryptographic algorithm. For example, during encryption, the key allows a transformation of a plaintext into a cipher-text and vice versa during decryption. The key may also be used to verify a digital signature and/or a message authentication code, MAC. A key is so called a symmetric key when the same key is used for both encryption and decryption. In asymmetric cryptography or public key cryptography, a keying material is a key pair, so called a private-public key pair comprising a public key and a private key. In an asymmetric or public key cryptosystem (such as Rivest Shamir Adelman, RSA, cryptosystem, or Elliptic curve cryptography, ECC), the public key is used for encryption and/or signature verification while the private key is used for decryption and/or signature generation.

In one or more example audio devices, the first audio device key is a private key of a public-private key pair. For example, the private key may be part of a certificate stored on the memory, e.g. during manufacturing.

In the present disclosure, the term "certificate" refers to a data structure that enables verification of its origin and content, such as verifying the legitimacy and/or authenticity of its origin and content. The certificate is seen as a digital certificate, such as a cryptographic certificate. The certificate is configured to provide a content that is associated to a holder of the certificate by an issuer of the certificate. The certificate optionally comprises keying material, such as one or more keys, and/or a signature, so that a recipient of the certificate is able to verify or authenticate the certificate content and origin. The certificate permits thus to achieve authentication of origin and content, non-repudiation, and/or integrity protection. The certificate may further comprise a validity period, one or more algorithm parameters, and/or an issuer. A certificate may comprise a digital certificate, a public key certificate, an attribute certificate, and/or an authorization certificate. Examples of certificates are X.509 certificates, and Secure/Multipurpose Internet Mail Extensions, S/MIME, certificates, and/or Transport Layer Security, TLS, certificates.

A certificate may comprise a certificate type identifier. The certificate type identifier may indicate a type of the certificate amongst a variety of certificate types. The certificate type identifier may be used by the hearing device to identify what type of certificate the hearing device receives, stores, authenticates and/or retrieves. A certificate may comprise a version identifier indicative of a data format version of the certificate. The hearing device may use the certificate type identifier and/or the version identifier to determine what type of data the certificate comprises and/or what type of data is comprised in a field of the certificate. For example, the hearing device may determine based on the certificate type identifier and/or version identifier what field of the certificate comprises a digital signature and/or which public key is needed to verify the digital signature of the certificate. It may be envisaged that there is a one-to-one mapping between the certificate type identifier and the public-private key pair.

A certificate may comprise a signing device identifier. The signing device identifier refers to a unique identifier identifying the device that has signed the certificate, such as a manufacturing device, e.g. an integrated circuit card, a smart card, a hardware security module. The signing device identifier may for example comprise a medium access control, MAC, address of the signing device and/or a serial number of the signing device. The signing device identifier may allow for example the hearing device to determine whether the signing device is e.g. black-listed or not, and thus to reject certificates signed by a signing device that has been black-listed, e.g. due to theft or other corruption.

A certificate may comprise one or more hardware identifiers. A hardware identifier may identify a piece of hardware comprised in the hearing device, such as a radio chip comprised in the hearing device and/or a digital signal processor (processing unit) of the hearing device. The hardware identifier(s) may be stored in a register (regarded as comprised in second memory parti of memory unit) of the piece of hardware comprised in the hearing device during manufacturing of the piece of hardware. The hardware identifier may comprise a serial number of the hardware, a chip identifier, or any combination thereof. The hearing device receiving or retrieving from the memory unit a certificate comprising the hardware identifier may verify the certificate by comparing the stored hardware identifier and the corresponding hardware identifier comprised in the certificate. Such verification may be performed upon reception of the certificate, and/or upon retrieval of the certificate from the memory unit, such as at boot or power-on of the hearing device.

A certificate may comprise one or more client device type authorization identifiers. A client device type may comprise a model, category, or type of client devices, such as a tablet product model, category or type, a USB dongle product model, category, or type. A client device type authorization identifier is an identifier of an authorized client device type, such as an identifier of the client device types that the hearing device may authorize or accept for communication, such as for fitting. For example, the client device type authorization identifier is in one or more hearing devices a bit-field indicative of the type(s) of client device the hearing device should allow for fitting.

A certificate may comprise a token parameter. The token parameter may indicate whether a token-based authentication between the hearing device and a client device is to be enabled or not. For example, if the token parameter is set to 0, token-based authentication of client devices is not to be enabled by the hearing device and the hearing device is to use for example a combination of client device type identifier and/or a client device identifier (such as a serial number) to perform an authentication of the client device. If for example the token parameter is set to 1, token-based authentication of client devices is to be enabled by the hearing device, i.e. the hearing device authenticates the client device based on a token received from the client device. The hearing device may also derive a session-specific token based on the received token parameter which is used to e.g. accept the connection to the client device without user intervention.

A certificate may comprise one or more of a hardware platform identifier, a software platform identifier, and/or a certificate timestamp. The hardware platform identifier may identify a hardware platform, such as an operational hearing device hardware platform, i.e. a hardware platform compatible with the hearing device certificate. The software platform identifier may identify one or a family of software platforms on which the certificate is configured to operate. The certificate timestamp refers to a timestamp of production or manufacture of the certificate, such as a timestamp of the manufacturing device indicating a time instant when the certificate is generated. The certificate timestamp may be in form of e.g.: hour, min, date, month, year. The hearing device may subsequently perform version control and revocation using the hardware platform identifier, the software platform identifier, and/or the certificate timestamp.

A certificate may comprise a signature also denoted digital signature. The digital signature enables a proof or verification of authenticity of the certificate, such as verification of the signer legitimacy. The hearing device may be configured to verify digital signature(s) when determining if the certificate comprising the digital signature is valid, e.g. at start-up or booting of the hearing device and/or when receiving the certificate. A digital signature of a certificate is verifiable by the hearing device e.g. using a corresponding public key, e.g. stored in another certificate and/or in a locked part of the memory unit. If the digital signature is not successfully verified using the alleged public key, the hearing device may disregard the certificate and/or forgo/abort normal operation of the hearing device or operation according to one or more certificates. This may provide the advantage that the hearing device rejects a certificate that is tampered or received from unauthenticated parties. The communication with the hearing device may thus be robust against impersonation, modification, and masquerading attacks and/or misuse of a hearing device. In the present disclosure, to abort/aborting normal operation of the hearing device may comprise one or more of to enter a service mode, a repair mode, or a reboot mode. To abort/aborting normal operation of the hearing device may comprise forgo compensating for hearing loss of the user and/or switch the hearing device off. To abort/aborting normal operation of the hearing device may comprise to enter a software update mode.

In one or more example audio devices, the memory has stored thereon a plurality of certificate including a first certificate and a second certificate, and optionally a third certificate.

In one or more example audio devices, a certificate comprises a plurality of private keys and/or a plurality of symmetric keys.

In one or more example audio devices, the first audio device key is a session key established during an initialization of a session between the first audio device and the second audio device, e.g. by using cryptographic material which can be part of the certificate. In one or more exemplary audio devices, the first audio device sets up a connection to the external device by obtaining a session key. In one or more exemplary audio devices, setting up a connection comprises encrypting the session key with the private key to obtain an encrypted session key. In one or more exemplary methods, setting up a connection comprises transmitting the encrypted session key to the external device than can decrypt the session key using the public key corresponding to the private key.

In one or more examples, the first audio device is configured to obtain (e.g. receive from an external device) first authentication data. The first authentication data may be seen as a means for proving legitimacy, such as a token and/or a challenge (such as a first audio device challenge value, e.g. as a random or pseudo-random value) used to prove the legitimacy of the first audio device, e.g. by proving the possession of the first audio device key by the sender of the first authentication message. For example, the first audio device can receive the first authentication data from the server device in response to an authentication request sent from the first audio device to the server device.

The first audio device is configured to encrypt the first authentication data with (e.g. using) the first audio device key. In other words, for example, the first audio device encrypts the first authentication data by applying an encryption scheme that is based on the first audio device key disclosed herein. In one or more examples, the first audio device encrypts the first authentication message, thereby having the first authentication data in encrypted form.

In one or more examples, the first authentication data is received by the first audio device from the server device in response to an authentication request sent by the first audio device. In one or more examples, the first authentication data is generated by the first audio device and transmitted to the server device in the first authentication message or the authentication request preceding the first authentication message.

The first audio device is configured to send, to an external device, a first authentication message comprising a first audio device identifier associated with the first audio device and the first authentication data encrypted with the first audio device key.

An audio device identifier (such as the first audio device identifier, and/or the second audio device identifier) can be seen as an identifier associated with (e.g. uniquely associated, e.g. uniquely identifying) the audio device.

As used herein the term "identifier" refers to a piece of data that is used for identifying, such as for categorizing, and/or uniquely identifying. The identifier may be in a form of a word, a number, a letter, a symbol, a list, an array, or any combination thereof. For example, the identifier as a number may be in the form of an integer, such as unsigned integer, uint, with a length of e.g. 8 bits, 16 bits, 32 bits, etc., such as an array of unsigned integers. A device identifier may indicate or identify a device, such as a hardware identifier. A hardware identifier can include a hardware number of the audio device and/or a serial number of the audio device.

The transmission of the first audio device identifier and the encrypted first authentication data allows the external device to authenticate the first audio device.

In one or more examples, the first audio device is configured to send, to the external device, a second audio device identifier associated with the second audio device. The second audio device is different from the first audio device.

Optionally, the first audio device is configured to receive, from the external device, a first authentication response. Optionally, the first authentication response indicates whether the first audio device is authenticated by the external device and the second audio device is authenticated by the external device. For example, in the event that the first authentication response indicates that the

In one or more example audio devices, the processor is configured to receive the second audio device identifier from the second audio device. For example, when the second audio device and the first audio device initiate a communication, each audio device obtains (e.g. receives) the other audio device's identifier.

In one or more example audio devices, the processor is configured to send the first authentication message to the external device via a communication application installed on a communication device.

In one or more examples, the external device is a server device configured to authenticate the first audio device based on the first authentication data encrypted with the first audio device key. The server device is configured to communicate with the first audio device and/or the second audio device. For example, the server device can be seen as an authentication server device that authenticates audio devices, and other devices, e.g. pertaining to the same manufacturer and/or to the same organization. In other words, the server device for example holds, and/or has access to credentials and cryptographic material enabling the server device to authenticate devices.

In one or more example audio devices, the processor is configured to authenticate the second audio device. For example, during or after the authentication of the second audio device, the first audio device establishes a session key for the session between the first and the second audio devices. In some examples, the first audio device sends the first authentication message by logging into the server device in the cloud, e.g. by sending (such as through a mobile application). For example, as the encrypted challenge is generated only with the legitimate first audio device key, the server device can verify the legitimacy of the first audio device key by decrypting the encrypted challenge with the audio device key that the server device retrieves based on the first audio device identifier. In some examples, the first authentication message includes the second audio device identifier to obtain from the server device an authentication status on the second audio device. For example, when the second audio device has successfully been authenticated by the server device, the server device updates the authentication status of the second audio device to AUTHENTICATED OK, so that the server device can indicate that in the first authentication message to the first audio device. Vice versa, for example, when the first audio device has successfully been authenticated by the server device, the server device updates the authentication status of the first audio device to AUTHENTICATED OK, so that the server device can indicate that in a second authentication message to the second audio device.

In other words, the server device for example confirms to audio device(s) that the counter communication partly is to be trusted based on a recent authentication status (e.g. 1 day old status). Stated differently, the server device can verify a trusted device used in both ends of the communication.

In one or more examples, the trust given to the first audio device by the server device after being authenticated by the server device can be further passed onto one or more devices part of the personal area network of the user, such as a communication device associated with the first audio device etc.

In one or more examples, the external device is the second audio device configured to authenticate the first audio device. In one or more examples, the authentication of the first audio device, by the external device, is based on the first authentication data encrypted with the first audio device key. In one or more examples, where the second audio device with which the first audio device has established a session key during a connection setup, the first audio device uses the session key as the first audio device key to encrypt the first authentication data. This can be seen as a mutual authentication between the first and second audio devices based on the pre-established session key. For example, when the external device is the second audio device, the first authentication response does not need to include an indication that the second audio device is verified.

In one or more example audio devices, the processor is configured to authenticate the second audio device. In one or more example audio devices, the processor is configured to authenticate the second audio device by receiving, from the second audio device, a second authentication message. In one or more examples, the second authentication message comprises a second authentication data encrypted with a second audio device key. For example, the second audio device key is a session key and/or a unique key established in a first session and/or a token based key which can be retrieved by providing a token. In one or more examples, , the processor is configured to authenticate the second audio device by sending, to the second audio device, a second authentication response. In one or more examples, the second authentication response indicates whether the second audio device is authenticated by the first audio device.

In one or more example audio devices, the memory has stored thereon a group profile and/or a user profile. It may be appreciated that the authentication by the external device based on the audio device key provides a first layer of authentication, and the group profile and/user profile can be seen as enabling a second layer of authentication that links to the actual organization and/or to the actual user or person.

The group can be seen as an organization, such as a company, a manufacturer, a distributor etc. The user can be seen as person that is associated with the audio device, e.g. owning the audio device, and/or operating the audio device.

In one or more example audio devices, the memory has stored thereon the first audio device identifier associated with the group profile and/or the user profile. In one or more example audio devices, the group profile comprises one or more of: one or more role attributes (indicative of e.g. main owner, private owner, family member, job title in a company, a function in an organization, e.g. management level, confidentiality level, job function level, and/or project manager), one or more group identifiers (e.g. company identifier, family identifier, team identifier, e.g. based on domain name of an email address), a location parameter (e.g. a fixed room in an office location, and/or home location, an indoor location in office premises), and group data (e.g. access right(s), level of clearance, team identifier etc.).

For example, roles may be based on user roles, also job function, project-based, subject matter-based, organization based and/or internal vs. external status.

In one or more example audio devices, the user profile comprises one or more of: one or more role attributes, a user identifier, a location parameter, and user credential data. For example, user roles may be based on e.g. managerial status such as manager, non-manager, senior manager, etc; job function, e.g. project management, legal, finance, etc.; security clearance of individual, e.g. confidential, secret, top secret and/or participation in a group.

In one or more example audio devices, the first authentication message (e.g. in encrypted form and/or having the first authentication data encrypted) comprises a group identifier of the group profile and/or a user identifier of the user profile.

In one or more example audio devices, the processor is configured to obtain location data indicative of a location of the first audio device. In one or more example audio devices, the first authentication message comprises the location data.

In one or more example audio devices, the location data comprises one or more of: global positioning information (e.g. from a Global Positioning System, GPS), short-range positioning information (e.g. from a short-range communication system, e.g. Bluetooth, WLAN), cellular positioning information (e.g. from cellular communication system, e.g. 3GPP systems, e.g. cell identifier, picocell identifier, e.g. using SIM-enabled audio device).

In one or more example audio devices, the processor is configured to obtain biometrics data indicative of biometric sensor data obtained with one or more sensors of the first audio device, wherein the first authentication message comprises the biometric data.

In one or more example audio devices, the biometric data comprises a biometric signature, e.g. a digital signature based on the biometric data obtained using the first audio device key.

In one or more example audio devices, the biometric data comprises one or more of: EEG data, ECG data, blood flow data, pulse data, jaw movement data, ear movement data, ear canal data, ear geometry data, fingerprint data, voiceprint data, and facial biometric data.

In one or more example audio devices, the processor is configured to obtain one or more of a connection security parameter, a network identifier, and a connection identifier. In one or more example methods, the first authentication message comprises one or more of the connection security parameter, a network identifier (e.g. an IP address), and a connection identifier (e.g. a connection type). The connection security parameter may be indicative of the security associated with one or more connections to other participants in the conference. For example, use of a public WIFI for the transmitting communication device may result in a low connection security parameter compared to use of a GPS connection for the transmitting communication device.

The present disclosure provides a server device. The server device comprises a memory having stored thereon a first audio device key, a first audio device identifier associated with a first audio device, and a second device identifier associated with a second audio device. Optionally, the server device comprises an interface.

The server device comprises a processor operatively coupled to the memory and the interface.

The server device is configured to receive, from the first audio device, a first authentication message comprising a first audio device identifier associated with the first audio device.

Optionally, the server device is configured to receive, from the first audio device, a second audio device identifier associated with the second audio device (e.g. different from the first audio device), and a first authentication data encrypted with a first audio device key.

The server device is configured to authenticate the first audio device based on the first authentication message. In one or more example server device, the server device authenticates the first audio device by retrieving (e.g. from a lookup table, a database, a memory, etc.) the first audio device key using on the first audio device identifier, and by decrypting the first authenticated data using the retrieved audio device key.

The server device is configured to verify, based on the second audio device identifier, the second audio device. For example, the server device determines whether the second audio device has been authenticated in a previous preceding time period, using the second audio device identifier. For example, when the second audio device authenticated and connects with the server device, the server device can already acknowledge the verification of the first audio device to the second audio device.

The server device is configured to send, to the first audio device, a first authentication response indicating whether the first audio device is authenticated by the server device and optionally that the second audio device is verified by the server device.

It may be appreciated that the server device acts as a proxy to confirm to e.g. the second audio device that the first audio device is legitimate and vice versa.

In one or more example server devices, the memory has stored thereon the first audio device identifier associated with the group profile of the first audio device and/or the user profile of the first audio device, and optionally the second audio device identifier associated with a group profile of the second audio device and/or a user profile of the second audio device. In one or more example server devices, the group profile comprises one or more of: one or more role attributes, one or more group identifiers, a location parameter, and group data.

In one or more example server devices, the user profile comprises one or more of: one or more role attributes, a user identifier, a location parameter, and user credential data.

In one or more example server devices, the first authentication message (e.g. in encrypted form and/or having the first authentication data encrypted) comprises a group identifier of the group profile and/or a user identifier of the user profile.

The present disclosure provides for a method performed by a first audio device. In one or more example methods, the first audio device comprises a memory having stored thereon a first audio device key associated with the first audio device. In one or more examples, the method comprises obtaining first authentication data. The method comprises encrypting the first authentication data with the first audio device key. Optionally, the method comprises sending, to an external device, a first authentication message comprising a first audio device identifier associated with the first audio device. The first authentication message comprises a second audio device identifier associated with the second audio device. The first authentication message comprises the first authentication data encrypted with the first audio device key. The method comprises receiving, from the external device, a first authentication response indicating whether the first audio device is authenticated by the external device and optionally that the second audio device is verified by the external device.

The present disclosure provides for a method, performed by a server device, wherein the server device comprises a memory having stored thereon a first audio device key, a first audio device identifier associated with a first audio device, and a second device identifier associated with a second audio device. The method comprises receiving, from the first audio device, a first authentication message. In one or more example methods, the first authentication message comprises a first audio device identifier associated with the first audio device, a second audio device identifier associated with the second audio device, and a first authentication data encrypted with a first audio device key. The method comprises authenticating the first audio device based on the first authentication message. The method comprises verifying, based on the second audio device identifier, the second audio device. The method comprises sending, to the first audio device, a first authentication response indicating whether the first audio device is authenticated by the server device and optionally that the second audio device is verified by the server device.

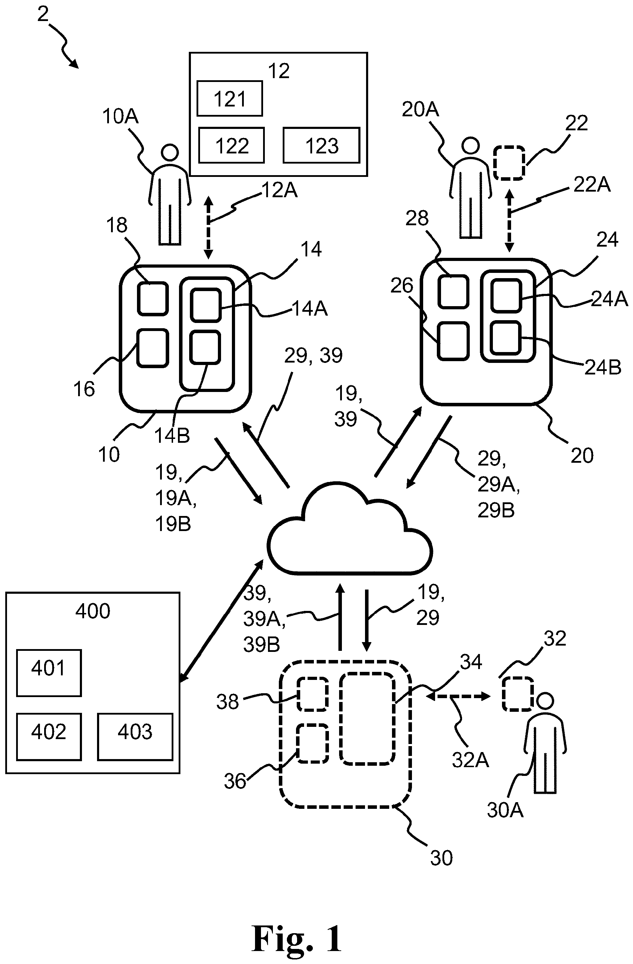

Fig. 1 shows schematically an exemplary communication system 2 according to this disclosure. The communication system 2 comprises an example first audio device 12 disclosed herein, and an example second audio device 22 disclosed herein, and an example server device 400 disclosed herein.

Fig. 1 shows an example communication system 2 comprising a first communication device 10 and a first audio device 12 via connection 12A (wireless and/or wired) used by first user 10A also denoted first participant. The first communication device 10 is a communication device as described herein and comprises an interface 14, memory circuitry 16, and processor circuitry 18. The first communication device 10 is configured to obtain and transmit, via the interface 14, first media data 19 associated with a media stream and including first audio data 19A and first video data 19B. The first audio data 19A or at least part thereof may be obtained with one or more microphones of the first audio device 12 and transmitted to the first communication device 10 via connection 12A. The first audio data 19A or at least part thereof may be obtained with a communication microphone 14A of the interface 14 in first communication device 12.

The communication system 2 comprises a second communication device 20 and a second audio device 22 via connection 24 (wireless and/or wired) used by second user 20A also denoted second participant. The second communication device 20 may be a communication device as described herein and comprises an interface 24, memory circuitry 26, and processor circuitry 28. The second communication device 20 is configured to obtain and transmit, via the interface 24, second media data 29 associated with a media stream and including second audio data 29A and second video data 29B. The second audio data 29A or at least part thereof may be obtained with one or more microphones of the second audio device 22 and transmitted to the second communication device 20 via connection 22A. The second audio data 29A or at least part thereof may be obtained with a communication microphone 24A of the interface 24 in second communication device 22.

The communication system 2 optionally comprises a third communication device 30 and a third audio device 32 via connection 34 (wireless and/or wired) used by third user 30A also denoted third participant. The third communication device 30 may be a communication device as described herein and comprises an interface 34, memory circuitry 36, and processor circuitry 38. The third communication device 30 is configured to obtain and transmit, via the interface 34, third media data 39 associated with a media stream and including third audio data 39A and third video data 39B. The third audio data 39A or at least part thereof may be obtained with one or more microphones of the third audio device 32 and transmitted to the third communication device 30 via connection 32A. The third audio data 39A or at least part thereof may be obtained with a communication microphone of the interface 24 in third communication device 12.

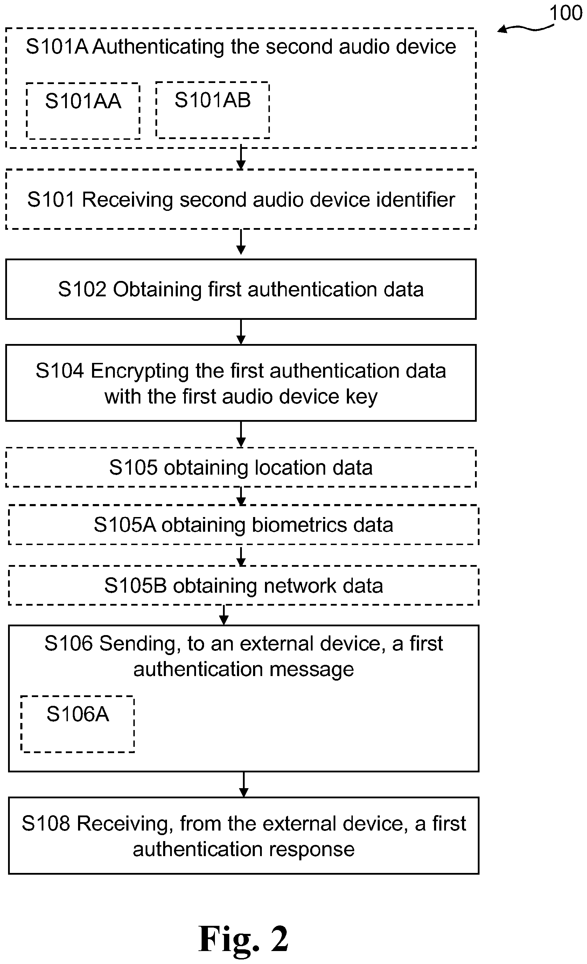

The first audio device 12 comprises memory circuitry 121, processor circuitry 122, and a receiver 123. The first audio device 12 may be configured to perform any of the methods disclosed in Fig.2. In other words, the first audio device 12 may be configured for secure communication with a second audio device. The first audio device 12 may be configured for communication with an external device, such as a server device 400, and/or second audio device 22.

The first audio device 12 is configured for wired and/or wireless communications via a wired and/or wireless communication system.

The first audio device 12 is configured to process (such as by using the processor circuitry 122) transducer input data and to provide an electrical output signal based on the transducer input data.

The first audio device 12 is configured to convert (such as via the receiver 123) the electrical output signal to an audio output signal.

The first audio device 12 is configured to store (such as via the memory circuitry 121 and/or using the processor circuitry 122) a first audio device key associated with the first audio device.

In one or more examples, the first audio device is configured to communicate (such as via the processor circuitry 122 and/or the receiver 123 and/or an interface) with a second audio device.

In one or more examples, the first audio device 12 is configured to obtain (such as via the receiver 123 and/or using the memory circuitry 121) first authentication data.

In one or more examples, the first audio device 12 is configured to encrypt (such as, via the processor circuitry 122) the first authentication data with the first audio device key.

In one or more examples, the first audio device 12 is configured to send (such as using the processor circuitry 122 and/or using the receiver 123) a first authentication message comprising a first audio device identifier associated with the first audio device, a second audio device identifier associated with the second audio device, and the first authentication data encrypted with the first audio device key.

In some examples, the first authentication message comprises in encrypted form (using the first audio device key) one or more of: the location data, the biometrics data, the connection security parameter, a network identifier, and a connection identifier. In some examples, the encrypted first authentication message including one or more of: the location data, the biometrics data, the connection security parameter, a network identifier, and a connection identifier, is encrypted using the first audio device key.

In one or more examples, the first audio device 12 is configured to receive (such as via an interface and/or the processor circuitry 122) a first authentication response indicating whether the first audio device is authenticated by the external device and optionally that the second audio device is verified by the external device.

Processor 122 is optionally configured to perform any of the operations disclosed in Figs. 2 (such as any one or more of S101A, S101, S101AA, S101AB, S102, S104, S105, S106, S106A, S108). The operations of the first audio device 12 may be embodied in the form of executable logic routines (for example, lines of code, software programs, etc.) that are stored on a non-transitory computer readable medium (for example, memory 121) and are executed by processor 122.

Furthermore, the operations of the first audio device 12 may be considered a method that the first audio device 12 is configured to carry out. Also, while the described functions and operations may be implemented in software, such functionality may also be carried out via dedicated hardware or firmware, or some combination of hardware, firmware and/or software.

Memory 121 may be one or more of a buffer, a flash memory, a hard drive, a removable media, a volatile memory, a non-volatile memory, a random-access memory (RAM), or other suitable device. In a typical arrangement, memory 121 may include a non-volatile memory for long term data storage and a volatile memory that functions as system memory for processor 122. Memory 121 may exchange data with processor 122 over a data bus. Control lines and an address bus between memory 121 and processor 122 also may be present (not shown in Fig. 1). Memory 121 is considered a non-transitory computer readable medium.

Memory 121 may be configured to store cryptographic material, such as certificate(s), audio device keys, audio device identifiers etc. in a part of the memory.

The server device 400 may be configured to communicate with one or more audio devices, such as first audio device 12 and/or second audio device 22.

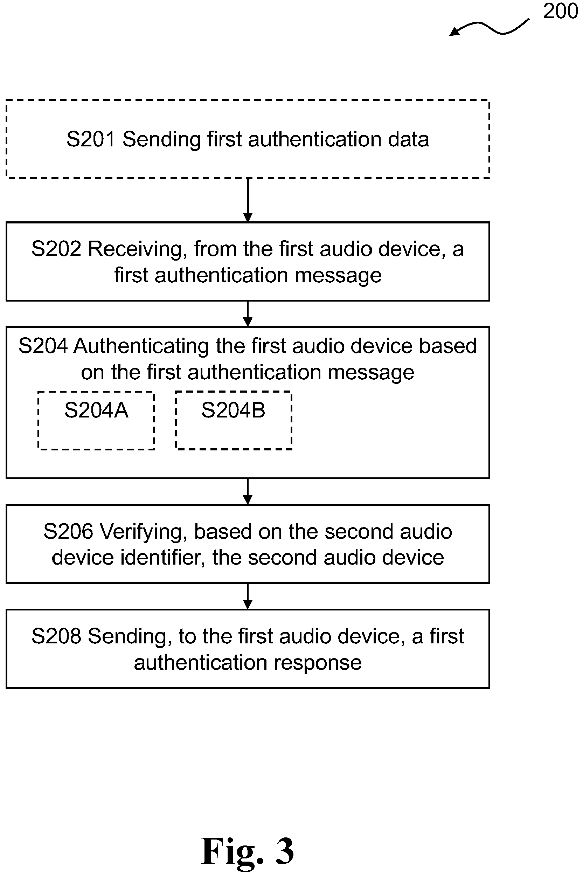

The server device 400 comprises memory circuitry 401. In one or more examples, memory circuitry 401 may have stored thereon a first audio device key and a first audio device identifier associated with a first audio device, and a second device identifier associated with a second audio device. The server device 400 comprises processor circuitry 402. The server device comprises a processor operatively coupled to the memory and the interface. The server device 400 comprises an interface 403. The server device 400 may be configured to perform any of the methods disclosed in Fig. 3.

The server device 400 is configured for wired and/or wireless communications via a wired and/or wireless communication system.

In one or more examples, the server device 400 is configured to receive (such as, via interface 403) from the first audio device, a first authentication message comprising a first audio device identifier associated with the first audio device, a second audio device identifier associated with the second audio device, and a first authentication data encrypted with a first audio device key.

In one or more examples, the server device 400 is configured to authenticate (such as via the processor circuitry 402) the first audio device based on the first authentication message.

In one or more examples, the server device 400 is configured to verify (such as via the processor circuitry 402 and/or the memory circuitry 401) based on the second audio device identifier, the second audio device.

In one or more examples, the server device 400 is configured to send (such as via interface 403), to the first audio device, a first authentication response indicating whether the first audio device is authenticated by the server device and optionally that the second audio device is verified by the server device.

Processor 402 is optionally configured to perform any of the operations disclosed in Fig. 3 (such as any one or more of S202, S204, S206, S208). The operations of the server device 400 may be embodied in the form of executable logic routines (for example, lines of code, software programs, etc.) that are stored on a non-transitory computer readable medium (for example, memory 401) and are executed by processor 402.

Furthermore, the operations of the server device 400 may be considered a method that the server device 400 is configured to carry out. Also, while the described functions and operations may be implemented in software, such functionality may also be carried out via dedicated hardware or firmware, or some combination of hardware, firmware and/or software.

Memory 401 may be one or more of a buffer, a flash memory, a hard drive, a removable media, a volatile memory, a non-volatile memory, a random-access memory (RAM), or other suitable device. In a typical arrangement, memory 401 may include a non-volatile memory for long term data storage and a volatile memory that functions as system memory for processor 402. Memory 401 may exchange data with processor 402 over a data bus. Control lines and an address bus between memory 401 and processor 402 also may be present (not shown in Fig. 1). Memory 401 is considered a non-transitory computer readable medium.

Memory 301 may be configured to store cryptographic material, such as certificate(s), audio device keys, audio device identifiers etc. in a part of the memory.

Fig. 2 is a flow diagram of an exemplary method 100 performed by a first audio device according to this disclosure. For example, the first audio device comprises a memory having stored thereon a first audio device key associated with the first audio device.

The method 100 comprises obtaining S102 first authentication data.

The method 100 comprises encrypting S104 the first authentication data with the first audio device key.

The method 100 comprises sending S106, to an external device, a first authentication message comprising a first audio device identifier associated with the first audio device. Optionally, the first authentication message comprises a second audio device identifier associated with the second audio device. The first authentication message comprises the first authentication data encrypted with the first audio device key.

The method 100 comprises receiving S108, from the external device, a first authentication response indicating whether the first audio device is authenticated by the external device and optionally the second audio device is verified by the external device.

In one or more example methods, the method 100 comprises receiving S101 the second audio device identifier from the second audio device.

In one or more example methods, the sending S106 comprises sending S106A the first authentication message to the external device via a communication application installed on a communication device.

In one or more example methods, the external device is a server device configured to authenticate the first audio device based on the first authentication data encrypted with the first audio device key.

In one or more examples, the external device is the second audio device configured to authenticate the first audio device. In one or more examples, the authentication of the first audio device, by the external device, is based on the first authentication data encrypted with the first audio device key.

In one or more example methods, the method 100 comprises authenticating S101A the second audio device.

In one or more example methods, the authenticating S101A comprises receiving S101AA, from the second audio device, a second authentication message. In one or more examples, the second authentication message comprises a second authentication data encrypted with a second audio device key.

In one or more examples, the authenticating S101A comprises sending S101AB, to the second audio device, a second authentication response. In one or more examples, the second authentication response indicates whether the second audio device is authenticated by the first audio device.

In one or more example methods, the memory has stored thereon a group profile and/or a user profile.

In one or more example methods, the memory has stored thereon the first audio device identifier associated with the group and/or the user profile.

In one or more example methods, the group profile comprises one or more of: one or more role attributes, one or more group identifiers, a location parameter, and group data.

In one or more example methods, the user profile comprises one or more of: one or more role attributes, a user identifier, a location parameter, and user credential data.

In one or more example methods, the first authentication message comprises a group identifier of the group profile and/or a user identifier of the user profile.

In one or more example methods, the method 100 comprises obtaining S105 location data indicative of a location of the first audio device. In one or more example audio devices, the first authentication message comprises the location data.

In one or more example audio devices, the location data comprises one or more of: global positioning information, short-range positioning information, cellular positioning information.

In one or more example methods, the method 100 comprises obtaining S105A biometrics data indicative of biometric sensor data obtained with one or more sensors of the first audio device. In one or more examples, the first authentication message comprises the biometric data. In one or more example methods, the biometric data comprises a biometric signature.

In one or more example methods, the biometric data comprises one or more of: EEG data, ECG data, blood flow data, pulse data, jaw movement data, ear movement data, ear canal data, ear geometry data, fingerprint data, voiceprint data, facial biometric data.

In one or more example methods, the method 100 comprises obtaining S105B one or more of a connection security parameter, a network identifier, and a connection identifier. In one or more example methods, the first authentication message comprises one or more of the connection security parameter, a network identifier, and a connection identifier. Network data comprises for example one or more of the connection security parameter, a network identifier, and a connection identifier.

In some examples, the first authentication message comprises in encrypted form (using the first audio device key) one or more of: the location data, the biometrics data, the connection security parameter, a network identifier, and a connection identifier. In some examples, the encrypted first authentication message including one or more of: the location data, the biometrics data, the connection security parameter, a network identifier, and a connection identifier, is encrypted using the first audio device key.

Fig. 3 is a flow diagram of an exemplary method 200 performed by a server device according to this disclosure.

The server device comprises a memory having stored thereon a first audio device key and a first audio device identifier associated with a first audio device. In one or more examples, the memory has stored thereon a second device identifier associated with a second audio device.

Optionally, the method 200 comprises sending first authentication data to the first audio device, e.g. in response to receiving an authentication request from the first audio device.

The method 200 comprises receiving S202, from the first audio device, a first authentication message. Optionally, the first authentication message comprises a first audio device identifier associated with the first audio device and a first authentication data encrypted with a first audio device key. Optionally, the first authentication message comprises a second audio device identifier associated with the second audio device.

The method 200 comprises authenticating S204 the first audio device based on the first authentication message. In one or more example methods, authenticating S204 the first audio device based on the first authentication message comprises comparing S204A the decrypted first authentication data and the transmitted first authentication, and determining S204 based on the comparison whether to authenticate: match results in successful authentication, no match results in failure to authenticate.

The method 200 comprises verifying S206, based on the second audio device identifier, the second audio device. The server device for example maintains and accesses a lookup table and/or a repository of authentication statuses of respective devices based on authentication success or failure of respective devices. The method 200 comprises sending S208, to the first audio device, a first authentication response indicating whether the first audio device is authenticated by the server device and optionally that the second audio device is verified by the server device.

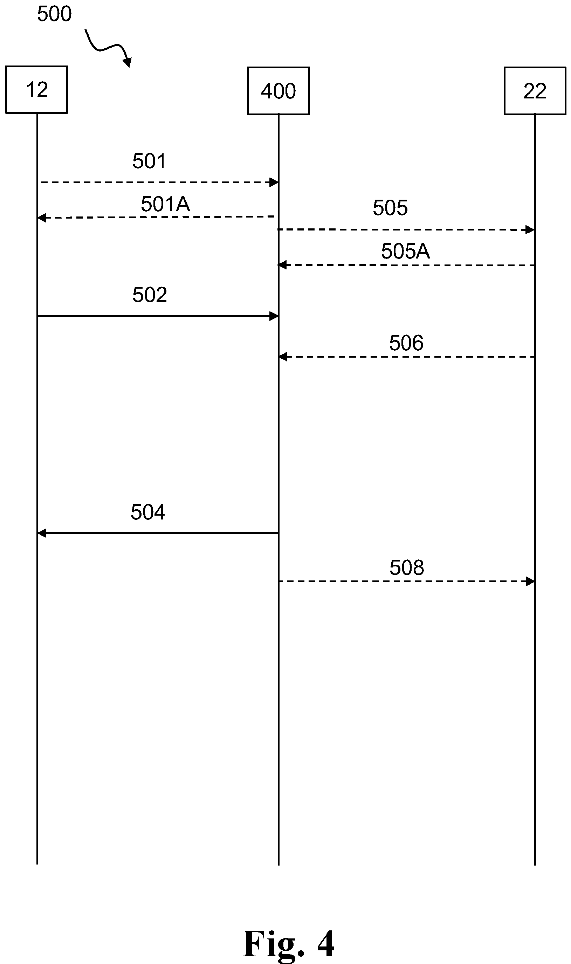

Fig. 4 shows a signalling diagram of an example communication between a first audio device and a server device according to this disclosure. Fig. 4 shows an example scenario for authentication between a first and second audio device via a server. Fig. 4 shows a signalling diagram of an example communication 500 between a first audio device 12, a second audio device 22, and a server device 400. In one or more examples, the first and second audio devices 12 and 22, respectively, and server device 400 may correspond to similar devices in Figures herein, for example, audio devices 12 and 22 and server device 400 of Fig. 1.

In one or more examples, the first audio device 12 sends to the server device 400 an authentication request 501.

In one or more examples, the first audio device 12 receives from the server device 400 the first authentication data 501A unencrypted as a challenge (e.g. S102 of Fig. 2, where the external device is a server device).

In one or more examples, the first authentication data in plain text is generated by the first audio device and transmitted to the server device 400 in the first authentication message 502 or the authentication request 501 preceding the first authentication message 502.

A first audio device 12 transmits a first authentication message 502 to server device 400. The transmission of the first authentication message 502 may correspond to the sending to an external device, a first authentication message S106 of Fig. 2, where the external device is a server device.

The server device 400 can then verify the encrypted first authentication data by retrieving the first audio device key, and decrypting the encrypted first authentication data and comparing the result of the decryption to the first authentication data sent in 501A. For example, when the comparison shows a match, the server device 400 updates the authentication status of the first audio device to AUTHENTICATED OK, and can now confirm that the first audio device is to be trusted to any other audio device requesting the authentication status by sending an authentication message including the first audio device identifier.

The server device 400 may, in response, send, to the first audio device 12, a first authentication response 504. In one or more examples, the first authentication response may indicate whether the first audio device is authenticated by the external device. The receiving, from the external device, for example, the server device 400, a first authentication response 504 may correspond to the receiving S108 of Fig. 2 where the external device is a server device. When the server device 400 authenticate successfully the first audio device 12 by successfully decrypting the first authentication data

The server 400 may receive from a second audio device 22, a second authentication message 506 following an optional communication of the second authentication data in 505 and/or 505A. In one or more examples, the second authentication message 506 may comprise a second authentication data encrypted with a second audio device key.

The server devices 400 sends, to the second audio device 22, a second authentication response 508. In one or more examples, the second authentication response 508 indicates whether the second audio device is authenticated by the first audio device.

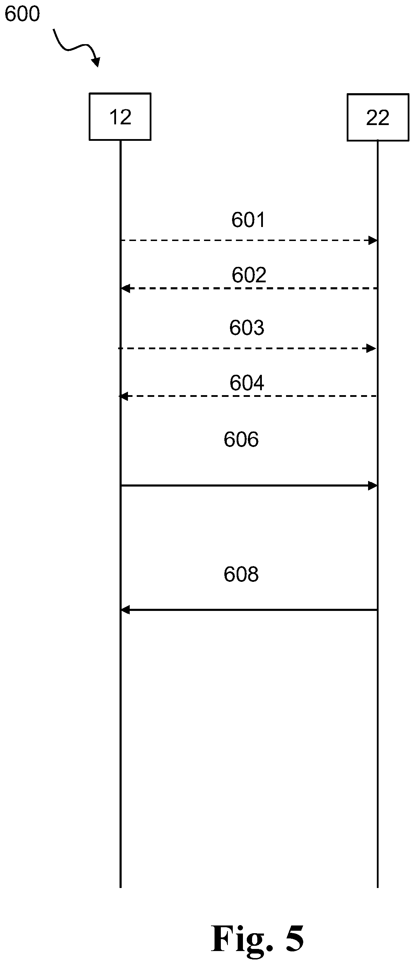

Fig. 5 shows a signalling diagram of an example communication between a first audio device and a second audio device according to this disclosure. Fig. 5 shows an example scenario for secure communication between a first and second audio device. Fig. 5 shows a signalling diagram of an example communication 600 between a first audio device 12 and a second audio device 22. In one or more examples, the first and second audio devices 12 and 22, respectively may correspond to similar components in Figures herein, for example, audio devices 12 and 22 of Fig. 1.

In one or more examples, the first audio device 12 and the second audio device 22 establish a session key based on their respective audio device keys in 601-602.

In one or more examples, the first audio device 12 sends to the second audio device 22 an authentication request 603.

In one or more examples, the first audio device 12 receives from the second audio device 22 the first authentication data 604 unencrypted as a challenge (e.g. S102 of Fig. 2, where the external device is a second audio device).

In one or more examples, the first authentication data is encrypted using the audio device key being the session key established in 601-602 by the first audio device and transmitted to the second audio device in the first authentication message 606.

The first audio device 12 may transmit to the second audio device 22 a first authentication message 606. The transmittal of the first authentication message 606 may correspond to the sending S106, to an external device, a first authentication message of Fig.2.

The second audio device 22 can then verify the encrypted first authentication data by retrieving the first audio device key which is the session key, and decrypting the encrypted first authentication data and comparing the result of the decryption to the first authentication data sent in 604. For example, when the comparison shows a match, the second audio device updates the authentication status of the first audio device to AUTHENTICATED OK, and can now confirm that the first audio device is to be trusted to any other audio device requesting the authentication status by sending an authentication message including the first audio device identifier.

The second audio device 22 may transmit, in response to the receiving of the first authentication message 606, a first authentication response 608. The transmittal of the first authentication response may correspond to the receiving S108, from the external device, a first authentication response of Fig. 2.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It may be appreciated that the figures comprise some modules or operations which are illustrated with a solid line and some modules or operations which are illustrated with a dashed line. The modules or operations which are comprised in a solid line are modules or operations which are comprised in the broadest example embodiment. The modules or operations which are comprised in a dashed line are example embodiments which may be comprised in, or a part of, or are further modules or operations which may be taken in addition to the modules or operations of the solid line example embodiments. It should be appreciated that these operations need not be performed in order presented. Furthermore, it should be appreciated that not all of the operations need to be performed. The example operations may be performed in any order and in any combination.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims, that the example embodiments may be implemented at least in part by means of both hardware and software, and that several "means", "units" or "devices" may be represented by the same item of hardware.

The various example methods, devices, and systems described herein are described in the general context of method steps processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform specified tasks or implement specific abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

## Claims

1. A first audio device for communication with a second audio device, the first audio device comprising :
a processor for processing transducer input data and providing an electrical output signal based on the transducer input data;
a receiver for converting the electrical output signal to an audio output signal; and
a memory having stored thereon a first audio device key associated with the first audio device;
wherein the first audio device is configured to communicate with a second audio device;
wherein the first audio device is configured to:
obtain first authentication data;
encrypt the first authentication data with the first audio device key;
send, to an external device, a first authentication message comprising a first audio device identifier associated with the first audio device, a second audio device identifier associated with the second audio device, and the first authentication data encrypted with the first audio device key; and
receive, from the external device, a first authentication response indicating whether the first audio device is authenticated by the external device and the second audio device is verified by the external device.

2. First audio device according to claim 1, wherein the processor is configured to receive the second audio device identifier from the second audio device.

3. First audio device according to any of the previous claims, wherein the processor is configured to send the first authentication message to the external device via a communication application installed on a communication device.

4. First audio device according to any of the previous claims, wherein the external device is a server device configured to authenticate the first audio device based on the first authentication data encrypted with the first audio device key.

5. First audio device according to any of the previous claims, wherein the external device is the second audio device configured to authenticate the first audio device based on the first authentication data encrypted with the first audio device key .

6. First audio device according to any of the previous claims, wherein the processor is configured to authenticate the second audio device.

7. First audio device according to claim 6, wherein the processor is configured to authenticate the second audio device by
- receiving, from the second audio device, a second authentication message comprising a second authentication data encrypted with a second audio device key ; and
- sending, to the second audio device, a second authentication response indicating whether the second audio device is authenticated by the first audio device.

8. First audio device according to any of the previous claims, the memory having stored thereon a group profile and/or a user profile.

9. First audio device according to claim 8, the memory having stored thereon the first audio device identifier associated with the group profile and/or the user profile.

10. First audio device according to any of claims 8-9, wherein the group profile comprises one or more of: one or more role attributes, one or more group identifiers, a location parameter, and group data.

11. First audio device according to any of claims 8-10, wherein the user profile comprises one or more of: one or more role attributes, a user identifier, a location parameter, and user credential data.

12. First audio device according to any of claims 8-11, wherein the first authentication message comprises a group identifier of the group profile and/or a user identifier of the user profile.

13. First audio device according to any of the previous claims, wherein the processor is configured to obtain location data indicative of a location of the first audio device, wherein the first authentication message comprises the location data.

14. First audio device according to claim 13, wherein the location data comprises one or more of: global positioning information , short-range positioning information, cellular positioning information.

15. First audio device according to any of the previous claims, wherein the processor is configured to obtain biometrics data indicative of biometric sensor data obtained with one or more sensors of the first audio device, wherein the first authentication message comprises the biometric data.

16. First audio device according to claim 15, the biometric data comprising a biometric signature .

17. First audio device according to any of claims 15-16, wherein the biometric data comprises one or more of: EEG data, ECG data, blood flow data, pulse data, jaw movement data, ear movement data, ear canal data, ear geometry data, fingerprint data, voiceprint data, and facial biometric data.

18. First audio data according to any of the previous claims, the processor is configured to obtain one or more of a connection security parameter, a network identifier, and a connection identifier, and wherein the first authentication message comprises one or more of the connection security parameter, a network identifier, and a connection identifier.

19. A server device comprising:
a memory having stored thereon a first audio device key and a first audio device identifier associated with a first audio device, and a second device identifier associated with a second audio device;
an interface;
a processor operatively coupled to the memory and the interface;
wherein the server device is configured to:
- receive, from the first audio device, a first authentication message comprising a first audio device identifier associated with the first audio device, a second audio device identifier associated with the second audio device , and a first authentication data encrypted with a first audio device key;
- authenticate the first audio device based on the first authentication message;
- verify, based on the second audio device identifier, the second audio device; and
- send, to the first audio device, a first authentication response indicating whether the first audio device is authenticated by the server device and the second audio device is verified by the server device.

20. Method, performed by a first audio device, wherein the first audio device comprises a memory having stored thereon a first audio device key associated with the first audio device, the method comprising:
obtaining first authentication data;
encrypting the first authentication data with the first audio device key;
sending, to an external device, a first authentication message comprising a first audio device identifier associated with the first audio device, a second audio device identifier associated with the second audio device, and the first authentication data encrypted with the first audio device key; and
receiving, from the external device, a first authentication response indicating whether the first audio device is authenticated by the external device and the second audio device is verified by the external device.

21. Method, performed by a server device, wherein the server device comprises a memory having stored thereon a first audio device key and a first audio device identifier associated with a first audio device, and a second device identifier associated with a second audio device, the method comprising
- receiving, from the first audio device, a first authentication message comprising a first audio device identifier associated with the first audio device, a second audio device identifier associated with the second audio device , and a first authentication data encrypted with a first audio device key;
- authenticating the first audio device based on the first authentication message;
- verifying, based on the second audio device identifier, the second audio device; and
- sending, to the first audio device, a first authentication response indicating whether the first audio device is authenticated by the server device and the second audio device is verified by the server device.
